# EUROPÄISCHE PATENTANMELDUNG

(11) **EP 1 797 982 A1**
(43) Veröffentlichungstag der Anmeldung: **20.06.2007**
(21) Anmeldenummer: 05405699.9
(22) Anmeldetag: 16.12.2005
(51) Int. Cl.: B23B 5/16, B23D 69/02

(54) **Werkzeug zum Bearbeiten von Rohr- und Formstückoberflächen**

(71) Anmelder: GEBERIT TECHNIK AG, 8645 Jona (CH)
(72) Erfinder: Höfliger, Peter, 8832 Wollerau (CH); Rüegg, Urs, 8645 Jona (CH); Keller, Goran, 8635 Dürnten (CH)
(74) Vertreter: Groner, Manfred

(57) **Zusammenfassung**

Das Werkzeug weist einen Halter (2) auf, an dem eine Klinge (8) mit wenigstens einer Kante (29) angeordnet ist, welche an eine zu bearbeitende Oberfläche (24) eines Rohres (23, 23') anlegbar ist. Die Klinge (8) ist als Schabklinge und der Halter (2) als Griff so ausgebildet, dass er die Schabklinge (8) an der genannten Oberfläche (24) in einer schabenden Bewegung führt. Die Kante (29) ist vorzugsweise strukturiert und wellenförmig ausgebildet, so dass die zu bearbeitende Oberfläche (24) mit kleinem Kraftaufwand furchenförmig abgeschabt wird.

## Beschreibung

Die Erfindung betrifft ein Werkzeug zum Bearbeiten von Rohr- und Formstückoberflächen, mit einem Halter, an dem eine Klinge mit einer Kante angeordnet ist, welche an die zu bearbeitende Oberfläche anzulegen ist.

Um Leitungsrohre und Formstücke aus Kunststoff mit Schweissmuffen zu verbinden, muss in der Regel eine äussere Oxidschicht entfernt werden. Dazu wurde bisher die genannte Oberfläche von Hand mit einem Messer, einem Schaber oder einer Klinge oder auch mit einem grobkörnigen Glaspapier bearbeitet. Dies ist einerseits vergleichsweise zeitaufwendig und andererseits besteht die Gefahr, dass die Oxidschicht ungleichmässig entfernt wird, so dass die nachträgliche Verschweissung nicht die vorgesehene Festigkeit erreicht und undicht sein kann.

Durch die EP 0 407 340 A des Anmelders ist ein Werkzeug bekannt geworden, das einen Schleifring aufweist, der in einem hülsenförmigen Halter gelagert ist und der mittels einer Bohrmaschine gedreht und auf das Rohr aufschiebbar ist. Durch den drehenden Schleifring wird die Mantelfläche des zu bearbeitenden Rohres aufgeraut. Das Werkzeug hat den Nachteil, dass für unterschiedliche Rohrdurchmesser unterschiedliche Schleifringe und Halter verwendet werden müssen.

Durch die EP 1 160 035 ist ein Schälgerät zum Schälen von Rohren bekannt geworden. Dieses besitzt einen C-förmigen oder ringförmigen Halter, an dem ein Messer gelagert ist, mit dem eine äussere Schicht eines Rohres abgeschält oder eingeschnitten werden kann. Mit diesem Werkzeug ist eine gewisse Anpassung an unterschiedliche Rohrdurchmesser vorgesehen, die aber sehr begrenzt ist.

Der Erfindung liegt die Aufgabe zugrunde, ein weiteres Werkzeug zum Bearbeiten von Rohr- und Formstückoberflächen zur Verfügung zu stellen. Das Werkzeug soll mit wenig Kraftaufwand von Hand bedienbar sein und einen grösseren Durchmesserbereich abdecken.

Die Aufgabe ist bei einem gattungsgemässen Werkzeug dadurch gelöst, dass die Klinge eine Schabklinge ist und der Halter als Griff so ausgebildet ist, dass er die Schabklinge an der genannten Oberfläche in einer schabenden Stellung führt. Eine Schabklinge kann in einem vergleichsweise grossen Winkelbereich von beispielsweise 68° bis 88° abschaben. Dadurch ist es möglich, Rohre und Formstücke mit sehr unterschiedlichen Durchmessern zu bearbeiten. Der Halter ist als Griff ausgebildet und kann dadurch bequem und mit vergleichsweise kleinem Kraftaufwand von Hand in schabender Stellung um das zu bearbeitende Rohrende herum bewegt werden.

Eine Bearbeitung mit noch weniger Kraftaufwand ist dann möglich, wenn gemäss einer Weiterbildung der Erfindung die genannte Kante wellenförmig ausgebildet ist, so dass die zu bearbeitende Oberfläche lediglich in einem Teilbereich furchenförmig abgeschabt wird. Es wird hierbei somit in einem ersten Arbeitsschritt lediglich ein Teilbereich der Oberfläche abgeschabt. Der zwischen den Furchen liegende Bereich wird in einem weiteren Arbeitsgang abgeschabt.

Nach einer Weiterbildung der Erfindung ist vorgesehen, dass die Klinge quer zur Längsrichtung der genannten Kante um einen vorbestimmten Betrag verschiebbar ist. Das Verschieben erfolgt dann besonders einfach und genau, wenn gemäss einer Weiterbildung der Erfindung die Klinge mit einem Umstellorgan verschiebbar ist.

Nach einer Weiterbildung der Erfindung besitzt dieses Umstellorgan einen drehbaren Exzentemocken, an dem die Klinge fliegend gelagert ist. Der Exzenternocken greift in eine Bohrung der Klinge ein. Die Klinge ist um den Mittelpunkt dieser Bohrung begrenzt schwenkbar.

Nach einer Weiterbildung der Erfindung ist die Klinge in einem Schlitz des Halters gelagert. Dadurch wird erreicht, dass sich die Klinge unabhängig von der exakten Position des Halters am Rohr immer über ihre gesamte Länge an die Mantelfläche des Rohres anlegt.

Eine lange Benutzungsdauer ergibt sich dann, wenn die Klinge als Wendeklinge mit vier Kanten ausgebildet ist.

Ein besonders einfaches und sicheres Arbeiten ist dann möglich, wenn gemäss einer Weiterbildung der Erfindung der Halter eine fingerförmige ergonomische Kontur und insbesondere Griffmulden aufweist, die sich parallel zur Längsrichtung der Klinge erstrecken. Die Griffmulden sind an einer Oberseite des Halters angeordnet.

Das erfindungsgemässe Werkzeug ermöglicht ein sehr gleichmässiges Abschaben einer äusseren Schicht mit vergleichsweise kleinem Kraftaufwand an Rohren mit unterschiedlichem Durchmesser. Es eignet sich insbesondere für Kunststoffrohre, die auch mehrschichtige Rohre mit einer äusseren Schicht aus Kunststoff sein können. Denkbar ist aber auch eine Anwendung für die Bearbeitung von Kabeln mit einer rohrförmigen Aussenschicht aus Kunststoff.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Figur 1: eine räumliche Ansicht eines erfindungsgemässen Werkzeugs,
- Figur 2: eine weitere Ansicht des Werkzeugs,
- Fig. 3 und 4: schematisch das Wenden der Klinge,
- Fig. 5 bis 8: schematisch einzelne Schritte beim Bearbeiten eines Rohres und
- Figur 9: ein Schnitt durch ein an Rohre angelegtes erfindungsgemässes Werkzeug.

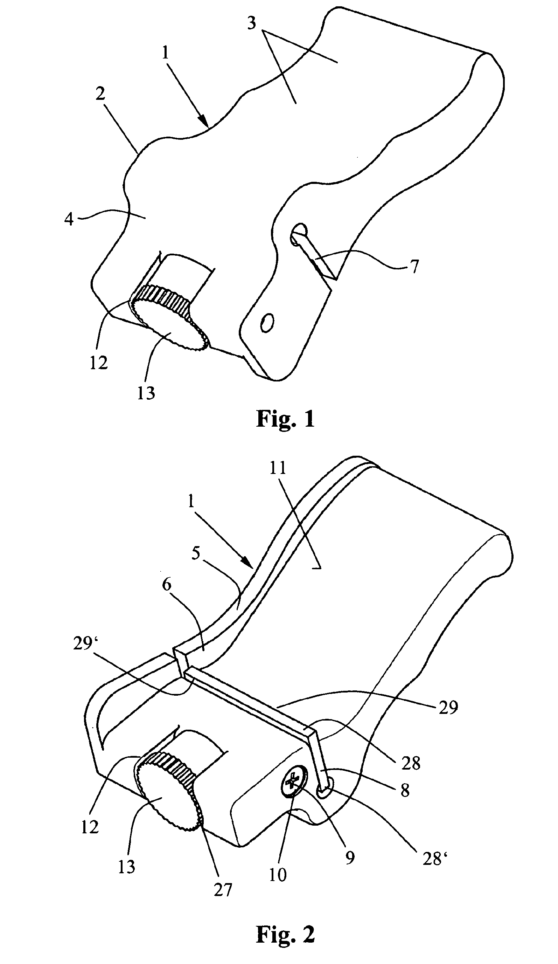

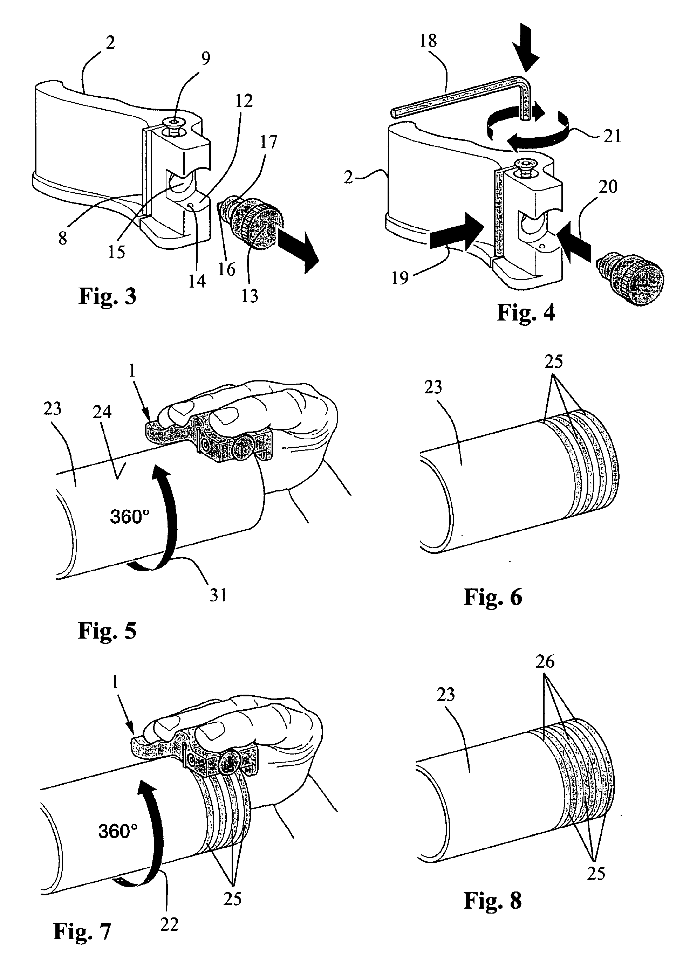

Das in den Figuren 1 und 2 gezeigte Werkzeug 1 besitzt einen Halter 2 für eine Schabklinge 8, die in einem Schlitz 7 gelagert ist. Der in der Seitenansicht etwa bogenförmige Halter 2 besitzt oberseitig mehrere Griffmulden 3 und 4, die eine von Hand Führung des Werkzeuges 2 ermöglicht, wie dies in den Figuren 5 und 7 gezeigt ist. Der Halter 2 ist somit wie ersichtlich mit drei Fingern greifbar, während der Daumen in ein zu bearbeitendes Rohr oder Formteil 23 eingreift. Zur achsialen Führung des Halters 2 an der Frontseite des Rohres 23 besitzt der Halter 2 gemäss Figur 2 einen an einer Innenseite 11 vorstehenden Rand 5, der mit einer Innenseite 6 einen Rohranschlag bildet. Die Innenseite 11 ist wie ersichtlich im Wesentlichen konkav ausgebildet und die Schabklinge 8 ragt an dieser Innenseite 11 vor.

Die Schabklinge 8 besitzt an einer Stirnfläche 28 eine Schabkante 29, die gemäss Figur 5 an eine Aussenseite 24 bzw. Mantelfläche des Rohres 23 anlegbar ist. Ausser dieser hier aktiven Schabkante 29 weist die Stirnfläche 28 eine zweite parallel dazu verlaufende Schabkante 29' sowie eine gegenüberliegende Stirnfläche 28' noch zwei weitere Schabkanten auf. Ist die Schabkante 29 infolge längeren Gebrauches unscharf, so können nacheinander durch entsprechendes Wenden der Schabklinge 8 die drei anderen Schabkanten verwendet werden.

Der Halter 2 besitzt an einem vorderen Ende eine Ausnehmung 12, die über eine Bohrung 15 mit dem Schlitz 7 verbunden ist. In diese Ausnehmung 12 ist ein zapfenförmiges Umstellorgan 13 eingesetzt, das eine umlaufende Randrierung 27 besitzt und an dieser von Hand gedreht werden kann. Das Umstellorgan 13 besitzt im Abstand zur Randrierung 27 eine umlaufende Nut 17, in die ein hier nicht sichtbares vorderes Ende einer Schraube 9 eingreift. Die Schraube 9 ist in eine Gewindebohrung 10 eingeschraubt, die parallel zur Schabklinge 8 verläuft. Bei eingeschraubter Schraube 9 kann das Umstellorgan 13 um seine Achse gedreht, aber nicht aus dem Halter 2 herausgezogen werden. In die Ausnehmung 12 ragt gemäss Figur 3 ein Raststift 14, der mit zwei hier nicht gezeigten diametral gegenüberliegenden Vertiefungen an der Aussenseite des Umstellorgans 13 zwei Rastpositionen definiert. Das Umstellorgan 13 rastet somit jeweils nach einer Umdrehung um 180 ° ein. Ist die Schraube 9 gemäss Figur 3 teilweise herausgeschraubt, so kann das Umstellorgan 13 gemäss Figur 3 aus der Ausnehmung 12 herausgezogen werden.

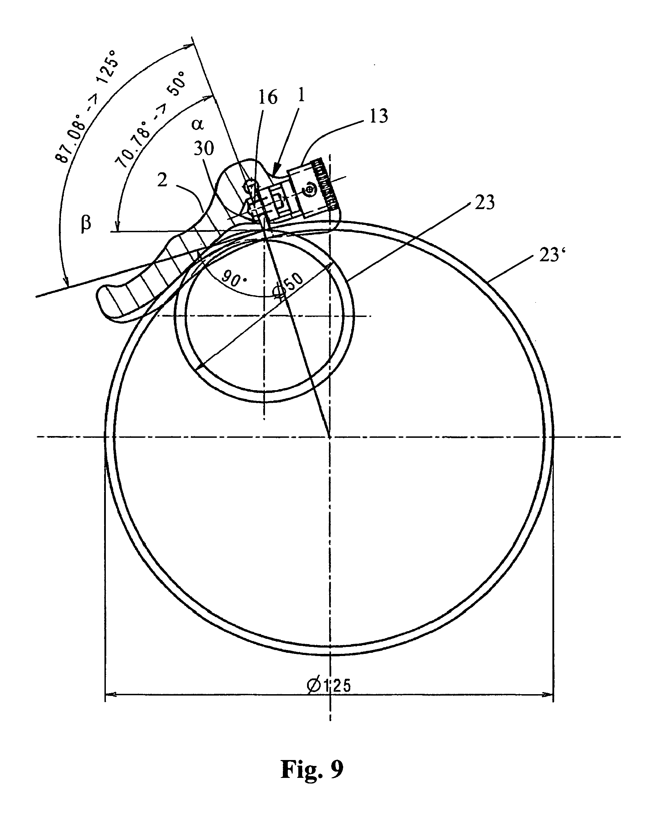

Das Umstellorgan 13 besitzt an einem vorderen Ende einen exzentrisch angeordneten Nocken 16, der in eine mittig angeordnete Bohrung 30 (Fig. 9) eingreift. Wird das Umstellorgan 13 um seine Achse gedreht, so wird die Schabklinge 8 in der Richtung der Stirnfläche 28 um einen bestimmten Betrag in der einen oder anderen Richtung verschoben. In der Figur 3 kann die Schabklinge 8 durch eine entsprechende Drehung des Umstellorgans 13 nach unten und dann wieder nach oben verschoben werden. Gleichzeitig ist die Schabklinge 8 im Schlitz 7 um den Nocken 16 begrenzt schwenkbar. Die Schabklinge 8 ist somit nicht völlig fest im Schlitz 7 fixiert, sondern kann zur Ausrichtung der Kante 29 in der Ebene des Schlitzes 7 gekippt werden. Die Schabklinge 8 ist somit schwimmend im Schlitz 7 bzw. auf dem Nocken 16 gelagert.

Die Stirnfläche 28 und entsprechend die gegenüberliegende und in Figur 2 nicht sichtbare Stirnfläche 28' sind nicht eben, sondern strukturiert und insbesondere wellenförmig geschliffen. Entsprechend sind auch die Kanten 29 und 29' wellenförmig ausgebildet. Dies gilt selbstverständlich auch für die übrigen Kanten.

Wird das Werkzeug 1 gemäss Figur 5 an die Aussenseite 24 angelegt und in Richtung des Pfeiles 31 um das Rohr 23 herumbewegt, so bilden sich die in Figur 6 gezeigten Furchen 25. Diese Furchen 25 entsprechen den Wellenbergen der Kante 29 und die dazwischen liegenden nicht abgeschabten Bereiche den Wellentälern . Selbstverständlich kann anstelle des Werkzeuges 1 auch das Rohr 23 gedreht werden. Sind die Furchen 25 eingearbeitet, so wird die Schabklinge 8 wie oben erläutert durch Drehen des Umstellorgans 13 um 180° verschoben. Das Werkzeug 1 wird dann gemäss Figur 7 nochmals angelegt und in Richtung des Pfeils 22 wiederum um 360° das Rohr 23 bewegt. Hierbei werden die in Figur 8 gezeigten Furchen 26 eingearbeitet. Diese Furchen 26 ergänzen die Furchen 25. Die Kontur der Stirnfläche 28 bzw. der Schliff der Kanten 29 kann auch so ausgeführt sein, dass sich die Furchen 25 und 26 überlappen. Die Aussenseite 24 ist damit im gewünschten Bereich flächig und die Oxidschicht, gleichmässig und lückenlos abgeschabt. Das bearbeitete Ende des Rohres 23 kann damit beispielsweise mit einer hier nicht gezeigten Elektromuffe oder dergleichen verschweisst werden.

Das Werkzeug 1 eignet sich für Rohre mit unterschiedlichem Aussendurchmesser, wie anhand der Figur 9 erläutert wird. Das Werkzeug 1 kann gemäss Figur 9 an ein vergleichsweise kleines Rohr 23 mit einem Durchmesser von 50 mm oder auch für ein Rohr 23' mit einem mehrfach grösseren Aussendurchmesser von 125 mm verwendet werden. In beiden Fällen ist der Winkel α bzw. β zwischen der Ebene der Schabklinge 8 und der Tangente an das Rohr 23 bzw. 23' kleiner oder gleich 90° und grösser oder gleich etwa 70°. Akzeptabel ist ein Schabwinkel α bzw. β, der grösser als etwa 68° und kleiner als etwa 88° ist. Es kann somit in einem vergleichsweise grossen Winkelbereich geschabt werden, was entsprechend eine Verwendung bei Rohren 23 bzw. 23' mit unterschiedlichen Aussendurchmessern ermöglicht. Dies deckt einen weiten Bereich von sanitären Rohren und Formstücken, insbesondere für Wasserleitungen ab. Wie bereits erwähnt, kann das Werkzeug 1 aber auch für andere rohrförmig oder rohrartige Teile verwendet werden, beispielsweise auch für Kabel und dergleichen.

Die Figuren 3 und 4 zeigen, wie die Klinge 8 zum Wechseln der Kante 29 gewendet werden kann. Zuerst wird die Schraube 9 mit einem Inbussschlüssel 18 aus dem Halter 2 herausgedreht und das Umstellorgan 13 aus dem Halter 2 herausgezogen. Die Klinge 8 ist nun frei und kann aus dem Schlitz 7 herausgenommen, gewendet und wieder gemäss Pfeil 19 eingesetzt werden. Das Umstellorgan 13 wird wieder gemäss Pfeil 20 in die Ausnehmung 12 eingesetzt und die Schraube 9 gemäss Pfeil 21 wieder vollständig in den Halter 2 eingeschraubt.

### Bezugszeichenliste

- 1: Werkzeug
- 2: Halter
- 3: Griffmulde
- 4: Griffmulde
- 5: Rand
- 6: Innenseite (Rohranschlag)
- 7: Schlitz
- 8: Schabklinge
- 9: Schraube
- 10: Bohrung
- 11: Innenseite
- 12: Ausnehmung
- 13: Umstellorgan
- 14: Raststift
- 15: Bohrung
- 16: Nocken

- 17: Nut
- 18: Inbusschlüssel
- 19: Pfeil
- 20: Pfeil
- 21: Pfeil
- 22: Pfeil
- 23: Rohr (Formteil)
- 24: Aussenseite
- 25: Furchen
- 26: Furchen
- 27: Randrierung
- 28: Stirnfläche
- 29: Schabkante
- 30: Bohrung
- 31: Pfeil

## Patentansprüche

1. Werkzeug zum Bearbeiten von Rohr- und Formstückoberflächen (24), mit einem Halter (2), an dem eine Klinge (8) mit wenigstens einer Kante (29) angeordnet ist, welche an die zu bearbeitende Oberfläche (24) anzulegen ist, **dadurch gekennzeichnet, dass** die Klinge (8) eine Schabklinge ist und der Halter (2) als Griff so ausgebildet ist, dass er die Schabklinge (8) an der genannten Oberfläche (24) in einer schabenden Bewegung führt.

2. Werkzeug nach Anspruch 1, **dadurch gekennzeichnet, dass** die genannte Kante (29) strukturiert und insbesondere wellenförmig ausgebildet ist, so dass die zu bearbeitende Oberfläche (24) furchenförmig abgeschabt wird.

3. Werkzeug nach Anspruch 1 oder 2, **dadurch gekennzeichnet, dass** die Klinge (8) in einem Schlitz (7) des Halters (2) gelagert ist.

4. Werkzeug nach einem der Ansprüche 1 bis 3, **dadurch gekennzeichnet, dass** die Klinge (8) im Schlitz (7) beweglich und insbesondere begrenzt schwenkbar gelagert ist.

5. Werkzeug nach einem der Ansprüche 1 bis 4, **dadurch gekennzeichnet, dass** die Klinge (8) quer zur Längsrichtung der genannten Kante (29) um einen vorbestimmten Betrag verschiebbar ist.

6. Werkzeug nach Anspruch 5, **dadurch gekennzeichnet, dass** die Klinge (8) mit einem von Hand bedienbaren Umstellorgan (13) verschiebbar ist.

7. Werkzeug nach Anspruch 6, **dadurch gekennzeichnet, dass** das Umstellorgan (13) einen drehbaren Exzenternocken (16) aufweist, an dem die Klinge (8) schwenkbar gelagert ist.

8. Werkzeug nach einem der Ansprüche 2 bis 7, **dadurch gekennzeichnet, dass** die Klinge (8) um einen Betrag so verschiebbar ist, dass sich ergänzende oder überschneidende Furchen (25, 26) schabbar sind.

9. Werkzeug nach einem der Ansprüche 1 bis 8, **dadurch gekennzeichnet, dass** die Klinge (8) als Wendeklinge mit zwei gegenüberliegenden Stirnflächen (28) und insgesamt vier Schabkanten (29) ausgebildet ist.

10. Werkzeug nach einem der Ansprüche 1 bis 9, **dadurch gekennzeichnet, dass** der Halter (2) als Rohranschlag einen Rand (5) aufweist, der an einer Innenseite (11) des Halters (2) vorsteht.

11. Werkzeug nach einem der Ansprüche 1 bis 10, **dadurch gekennzeichnet, dass** der Halter (2) Griffmulden (3, 4) aufweist, die sich parallel zur Längsrichtung der Klinge (8) erstrecken.

12. Werkzeug nach einem der Ansprüche 1 bis 11, **dadurch gekennzeichnet, dass** die Klinge (8) an wenigstens einem Ende der Kante (29) eine spitzig vorragende Schneide zum Bilden einer Kontrollrille aufweist.

13. Werkzeug nach einem der Ansprüche 1 bis 12, **dadurch gekennzeichnet, dass** es an einer Aussenseite mit drei Fingern fassbar und mit dem in das zu bearbeitende Rohr (23) einführbaren Daumen klammerartig an das Rohr (23) anlegbar und um das Rohr (23) bewegbar ist.
